# EUROPEAN PATENT APPLICATION

(11) **EP 4 454 906 A1**
(43) Date of publication of application: **30.10.2024**
(21) Application number: 22911366.7
(22) Date of filing: 22.12.2022
(51) Int. Cl.: B60G 21/055

(54) **METHOD FOR MANUFACTURING STABILIZER, AND STABILIZER**

(30) Priority: 24.12.2021 JP 2021210188
(71) Applicant: NHK Spring Co., Ltd., Yokohama-shi, Kanagawa 236-0004 (JP)
(72) Inventor: MIYASAKA, Tomoyuki, Yokohama-shi, Kanagawa 236-0004 (JP); FUJIMURA, Rintaro, Yokohama-shi, Kanagawa 236-0004 (JP); KAWAKAMI, Norihiro, Yokohama-shi, Kanagawa 236-0004 (JP)
(74) Representative: Hoffmann Eitle
(86) International application number: PCT/JP2022/047441
(87) International publication number: WO 2023/120664

(57) **Abstract**

A stabilizer manufacturing method according to the present invention includes forming a first end and a second end of a stabilizer by sandwiching and pressing ends of the tubular member by two pairs of pressing members whose facing directions are different from each other such that each of the first end and the second end has a wall thickness equivalent to a wall thickness of a main body of the stabilizer and the first end and the second end constitutes both ends of the stabilizer.

## Description

### Field

The present invention relates to a stabilizer manufacturing method and a stabilizer.

### Background

A stabilizer used in a vehicle or the like is attached to the vehicle to stabilize the posture of the vehicle. The stabilizer is formed by deforming a solid rod-shaped member, for example (refer to Patent Literature 1, for example). The stabilizer has its two ends connected to the vehicle, with each connecting portion having a planar shape. Each of the ends of the stabilizer is formed into a flat-plate shape by crushing a bar-shaped member, and then a hole for insertion of a bolt or the like is formed on each of the flat-plate shaped ends. At this time, both side surface portions of the flat-plate portions are cut off to adjust the width of the flat-plate portions.

Meanwhile, in order to reduce the weight of the vehicle, there is an increasing demand for weight reduction of the stabilizer. An example of implementing the weight reduction of the stabilizer is changing the material used for formation from a solid rod-like member to a hollow tubular member.

### Citation List

### Patent Literature

Patent Literature 1: JP 10-193944 A

### Summary

### Technical Problem

However, in a case where the material is changed to a tubular member, cutting off both side surface portions of the both ends, which have been formed into the flat-plate portions, might reduce the wall thickness of the side surface portions or lose the side surface portions by the cutting. A failure to ensure a sufficient wall thickness of the side surface portion would lower the strength of the stabilizer.

The present invention has been made in view of the above, and aims to provide a stabilizer manufacturing method and a stabilizer capable of achieving a sufficient strength in both ends of the stabilizer and weight reduction of the stabilizer.

### Solution to Problem

To solve the above-described problem and achieve the object, a stabilizer manufacturing method according to the present invention includes forming a first end and a second end of a stabilizer by processing a tubular member such that each of the first end and the second end has a wall thickness equivalent to a wall thickness of a main body of the stabilizer, wherein the first end and the second end constitutes both ends of the stabilizer, and the first end and the second end are formed by sandwiching and pressing the ends of the tubular member by two pairs of pressing members, facing directions of the two pairs of pressing members being different from each other.

Moreover, in the above-described stabilizer manufacturing method according to the present invention, the pair of first pressing members and the pair of second pressing members simultaneously sandwich and press the first end and the second end.

Moreover, in the above-described stabilizer manufacturing method according to the present invention, a movement amount of one pair of the two pairs of pressing members is restricted by a block, and the movement amount of another one pair of the two pairs of pressing members is restricted by abutment with the one pair of the two pairs of pressing members.

Moreover, a stabilizer according to the present invention is formed by sandwiching and pressing ends of a tubular member individually by two pairs of pressing members, facing directions of the two pairs of pressing members being different from each other, and includes: a main body having a tubular shape; a first end provided on one end side of the main body and having a flat plate shape, the first end having an annular shape having a wall thickness equivalent to a wall thickness of the main body; and a second end provided on another end side of the main body and having a flat plate shape, the second end having an annular shape having a wall thickness equivalent to the wall thickness of the main body, wherein the first end and the second end each include: first and second planar portions having planar shapes and formed on opposite sides to each other; and third and fourth planar portions formed on opposite sides to each other and having planar shapes and each positioned at a joining portion of the first and second planar portions.

### Advantageous Effects of Invention

According to the present invention, it is possible to achieve a sufficient strength in both ends of the stabilizer and weight reduction of the stabilizer. Brief Description of Drawings
FIG. 1 is a perspective view illustrating an example of a suspension mechanism including a stabilizer according to an embodiment of the present invention.
FIG. 2 is a plan view illustrating a configuration of the stabilizer illustrated in FIG. 1.
FIG. 3 is a plan view of the stabilizer in a region R illustrated in FIG. 2 as viewed in the direction of arrow A.
FIG. 4 is a cross-sectional view taken along line B-B illustrated in FIG. 3.
FIG. 5 is a plan view illustrating an end surface of the stabilizer as viewed in the direction of arrow C illustrated in FIG. 3.
FIG. 6 is a perspective view illustrating a configuration of a tubular member for fabricating the stabilizer according to an embodiment of the present invention.
FIG. 7 is a view illustrating a stabilizer manufacturing method according to an embodiment of the present invention.

### Description of Embodiments

Hereinafter, modes for carrying out the present invention (hereinafter, referred to as "embodiment") will be described with reference to the accompanying drawings. Note that the drawings are schematic, and the relationship between the thickness and the width of each portion, the ratio of the thickness of each portion, and the like may be different from actual measurements, and portions having different dimensional relationships and ratios may be included depending on the drawings.

### (Embodiment)

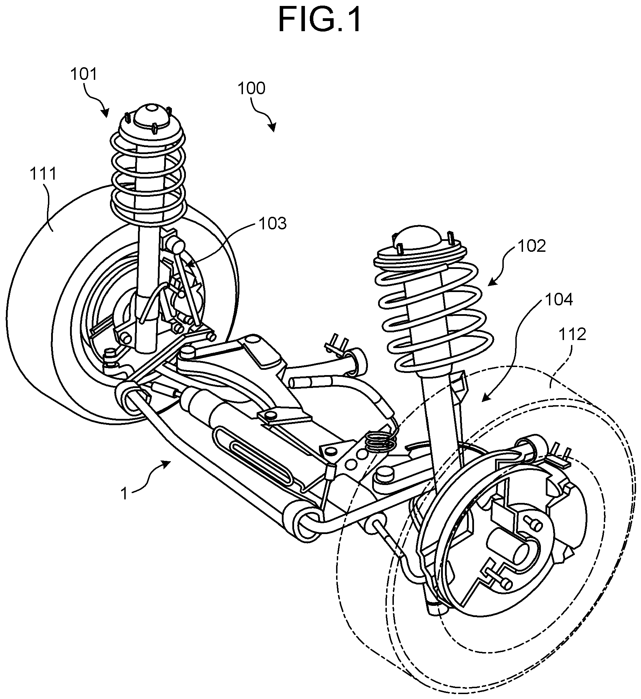

FIG. 1 is a perspective view illustrating an example of a suspension mechanism including a stabilizer according to an embodiment of the present invention. A suspension mechanism 100 illustrated in FIG. 1 includes a stabilizer 1, suspensions 101 and 102, and links 103 and 104. The suspensions 101 and 102 each include an extendable coil spring. When the suspension mechanism 100 is provided in an automobile, the suspensions 101 and 102 are provided respectively for tires 111 and 112 (for example, front wheels) so as to absorb vibration transmitted from the tires 111 and 112 corresponding to the unevenness of a road surface. The suspensions 101 and 102 are connected with the stabilizer 1 via the links 103 and 104, respectively.

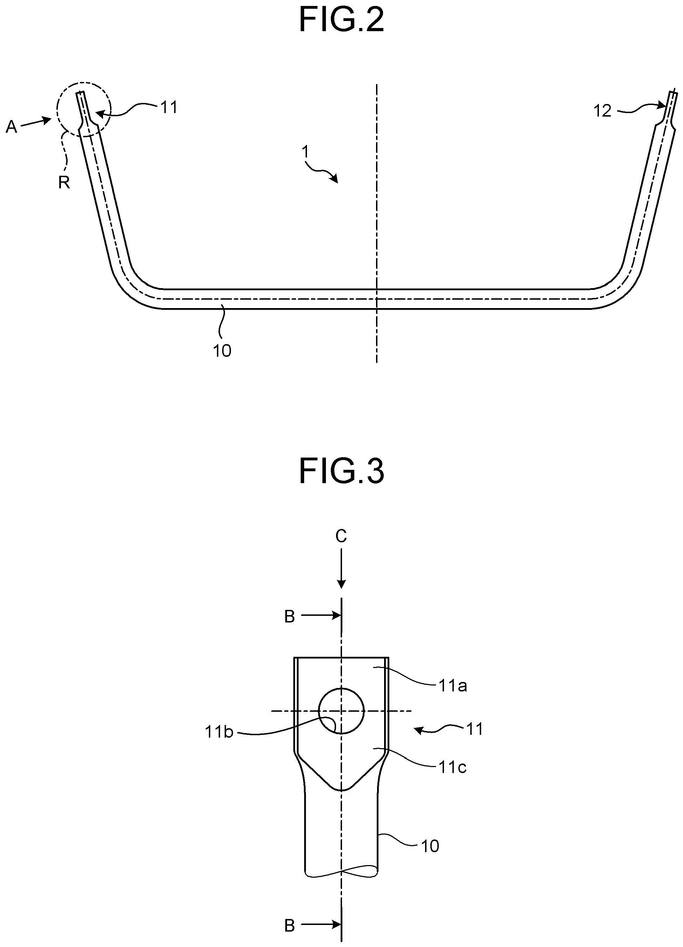

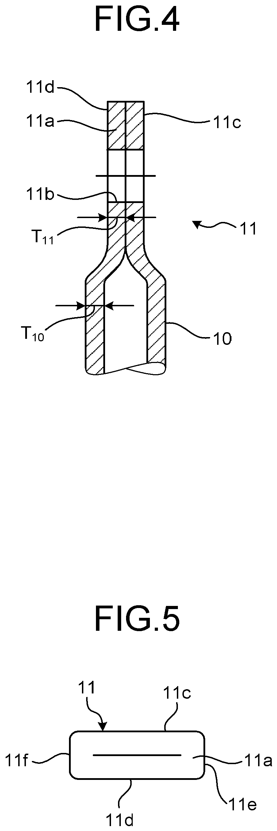

FIG. 2 is a plan view illustrating a configuration of the stabilizer illustrated in FIG. 1. FIG. 3 is a plan view of the stabilizer in a region R illustrated in FIG. 2 as viewed in the direction of arrow A. FIG. 4 is a cross-sectional view taken along line B-B illustrated in FIG. 3. FIG. 5 is a plan view illustrating an end surface of the stabilizer as viewed in the direction of arrow C illustrated in FIG. 3.

The stabilizer 1 is formed using a tubular member made of metal or various fibers (for example, carbon fibers). The stabilizer 1 includes: a main body 10; a first end 11 continuous with one end of the main body 10; and a second end 12 continuous with the other end of the main body 10.

The main body 10 has its central portion extending in a straight line shape, and has its both ends formed to be bent.

The first end 11 has a flat portion 11a having a flat shape. The flat portion 11a has a hole 11b penetrating in the thickness direction (refer to FIGS. 3 and 4). As illustrated in FIG. 4, a wall thickness T₁₀ of the main body 10 and a wall thickness T₁₁ of the first end 11 are equivalent to or substantially equal to each other. The term "substantially equal" as used herein represents equality including a difference in the degree of manufacturing error. The first end 11 has a closed annular shape (shape in which inner peripheral surfaces of the portions are in contact with each other) in plan view in the direction of arrow C (refer to FIG. 5). The shape of the portion, in the plan view, is not limited to the closed annular shape illustrated in FIG. 5, and may be an annular shape having a hollow space. At this time, a closed annular shape is preferable from the viewpoint of achieving a sufficient strength of the first end 11.

In addition, the first end 11 includes planar portions 11c to 11f. When the first end 11 is attached to an automobile or the like, the planar portion 11c comes into contact with a fastening member such as a bolt head, a washer, or a nut, for example. The planar portions 11c and 11d make planes perpendicular to the planar portions 11e and 11f. The surface of the stabilizer 1 with which the fastening member comes into contact is preferably a planar surface.

The second end 12 has a shape similar to the shape of the first end 11. The second end 12 has a flat portion having a flat shape, and has a hole penetrating in the thickness direction. The second end 12 has a wall thickness equivalent to or substantially equal to a wall thickness of the main body 10.

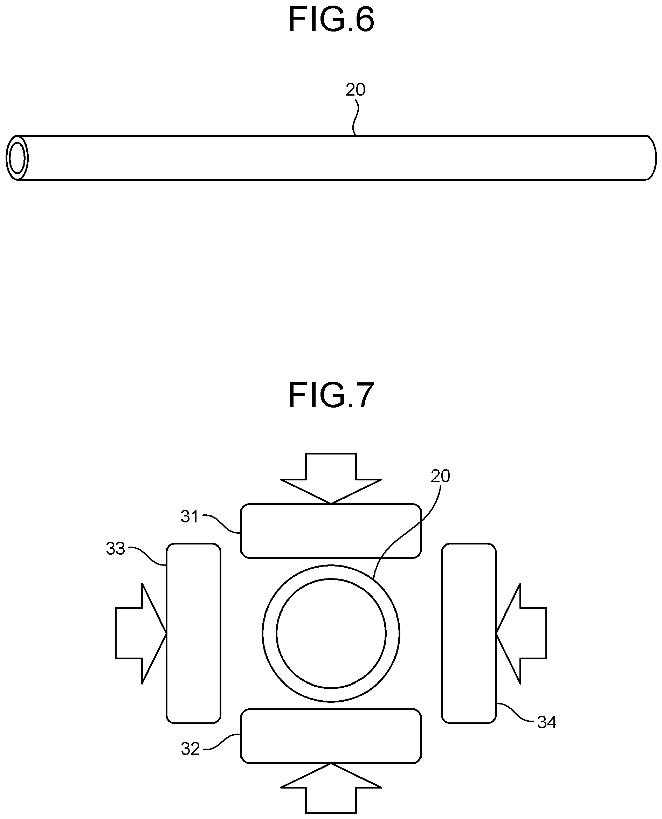

Subsequently, end fabrication processing of the stabilizer 1 described above will be described with reference to FIGS. 6 to 8. The stabilizer 1 is fabricated by processing a base material. In the present embodiment, a tubular base material is bent, and then, both ends of the material are processed into flat plate shapes. Thereafter, a through hole is formed at each end.

FIG. 6 is a perspective view illustrating a configuration of a tubular member for fabricating the stabilizer according to an embodiment of the present invention. A tubular member 20 to be a base material of the stabilizer 1 has a tubular shape extending with a uniform inner diameter and outer diameter. The wall thickness of the tubular member is the same as the wall thickness of the main body 10 of the stabilizer 1, for example.

In the present embodiment, the end of the tubular member 20 is sandwiched and pressed by two pairs of pressing members, thereby forming the end of the stabilizer 1. FIG. 7 is a view illustrating a stabilizer manufacturing method according to an embodiment of the present invention. As illustrated in FIG. 7, the end of the tubular member 20 is sandwiched and pressed by a first pressing member 31 and a second pressing member 32 facing each other across the end of the tubular member 20 and also pressed by a third pressing member 33 and a fourth pressing member 34 facing each other across the end of the tubular member 20 and facing each other in a direction orthogonal to the facing direction of the first pressing member 31 and the second pressing member 32, thereby forming the first and second ends. At this time, the individual ends are simultaneously pressed by the first pressing member 31, the second pressing member 32, the third pressing member 33, and the fourth pressing member 34 in two directions orthogonal to each other. At this time, for example, the first pressing member 31 and the second pressing member 32 come into contact with the tubular member 20 earlier than the third pressing member 33 and the fourth pressing member 34, and the third pressing member 33 and the fourth pressing member 34 abut on the first pressing member 31 and the second pressing member 32, thereby restricting the pressing amounts by the third pressing member 33 and the fourth pressing member 34. The first pressing member 31, the second pressing member 32, the third pressing member 33, and the fourth pressing member 34 are movable by the driving of an actuator, for example.

When the first end 11 and the second end 12 are formed by the first pressing member 31 to the fourth pressing member 34, pressing is performed while maintaining the wall thickness of the tubular member 20. Here, the wall thickness of the end at the time of completion is determined by the pressing amounts of the first pressing member 31 and the second pressing member 32. Specifically, the wall thickness is determined by a block that restricts the pressing amount of the first pressing member 31 and the second pressing member 32. This block is disposed at a position where the amount of movement of the first pressing member 31 and the second pressing member 32 by the actuator can be forcibly stopped and at a position not interfering with the tubular member 20, and this restriction of the pressing member by the block suppresses a state where the wall thickness becomes less than the thickness before the pressing. The movement amounts of the third pressing member 33 and the fourth pressing member 34 are restricted by abutting on the first pressing member 31 and/or the second pressing member 32. Therefore, when the width direction is pressed by the third pressing member 33 and the fourth pressing member 34, pressure is applied to the first pressing member 31 and/or the second pressing member 32, suppressing an increase of the wall thickness by the third pressing member 33 and the fourth pressing member 34. That is, the first end 11 and the second end 12 are equivalent in wall thickness to the tubular member 20. Since the portion other than the end of the tubular member 20 corresponds to the main body 10, the wall thickness of the first end 11 and the second end 12 is to be equivalent to the wall thickness of the main body 10.

In addition, by pressing both ends of the tubular member 20 in two directions orthogonal to each other to form the both ends into flat-plate shapes, it is possible to suppress an increase in a width of the first end 11 and the second end 12 with respect to the outer diameter of the main body 10, being a maximum width of the first end 11 and the second end 12 in a direction perpendicular to the extending directions of these ends.

In the present embodiment, the first end 11 and second end 12 of the stabilizer 1 are formed by pressing both ends of the tubular member 20 into flat-plate shapes in two directions orthogonal to each other. According to the present embodiment, by forming the first and second ends by pressing the material into a flat-plate shape while maintaining the wall thicknesses of the first reduced diameter portion 22 and the second reduced diameter portion 23, it is possible to achieve a sufficient strength in both ends by suppressing the thinning and to reduce the weight of the stabilizer by using the tubular shape.

In addition, in the present embodiment, both ends of the tubular member 20 are pressed in two directions orthogonal to each other to form a flat-plate shape, making it possible to form an end having an increased planar region while suppressing an increase in width. With this configuration, it is possible to increase a contact region with a fastening member at the first and second ends, and as a result, it is possible to increase the degree of freedom of applicable types of the fastening member and to stabilize the contact state with the fastening member.

Although the above-described embodiment is an example in which the first pressing member 31 and the second pressing member 32, and the third pressing member 33 and the fourth pressing member 34, simultaneously sandwich the end of the tubular member 20, the timing is not limited thereto, and the timings of sandwiching the tubular member 20 may be different from each other.

Although the embodiments for carrying out the present invention have been described so far, the present invention should not be limited only by the above-described embodiments. For example, the present invention is applicable to a product in which the end is required to be formed into a flat-plate shape and the width of the flat plate portion is required to be suppressed.

As described above, the present invention can include various embodiments and the like not described herein, and various design changes and the like can be made without departing from the technical concept specified by the claims.

### Industrial Applicability

As described above, the stabilizer manufacturing method and the stabilizer according to the present invention are suitable for achieving a sufficient strength in both ends of the stabilizer and weight reduction of the stabilizer.

### Reference Signs List

- 1: STABILIZER
- 10: MAIN BODY
- 11: FIRST END
- 11a: FLAT PORTION
- 11b: HOLE
- 11c: to 11f PLANAR PORTION
- 12: SECOND END
- 20: TUBULAR MEMBER
- 31: FIRST PRESSING MEMBER
- 32: SECOND PRESSING MEMBER
- 33: THIRD PRESSING MEMBER
- 34: FOURTH PRESSING MEMBER

## Claims

1. A stabilizer manufacturing method comprising
forming a first end and a second end of a stabilizer by processing a tubular member such that each of the first end and the second end has a wall thickness equivalent to a wall thickness of a main body of the stabilizer, wherein
the first end and the second end constitutes both ends of the stabilizer, and
the first end and the second end are formed by sandwiching and pressing the ends of the tubular member by two pairs of pressing members, facing directions of the two pairs of pressing members being different from each other.

2. The stabilizer manufacturing method according to claim 1, wherein the pair of first pressing members and the pair of second pressing members simultaneously sandwich and press the first end and the second end.

3. The stabilizer manufacturing method according to claim 1 or 2,
wherein a movement amount of one pair of the two pairs of pressing members is restricted by a block, and
the movement amount of another one pair of the two pairs of pressing members is restricted by abutment with the one pair of the two pairs of pressing members.

4. A stabilizer formed by sandwiching and pressing ends of a tubular member individually by two pairs of pressing members, facing directions of the two pairs of pressing members being different from each other, the stabilizer comprising:
a main body having a tubular shape;
a first end provided on one end side of the main body and having a flat plate shape, the first end having an annular shape having a wall thickness equivalent to a wall thickness of the main body; and
a second end provided on another end side of the main body and having a flat plate shape, the second end having an annular shape having a wall thickness equivalent to the wall thickness of the main body,
wherein the first end and the second end each include:
first and second planar portions having planar shapes and formed on opposite sides to each other; and
third and fourth planar portions formed on opposite sides to each other and having planar shapes and each positioned at a joining portion of the first and second planar portions.
